# EUROPEAN PATENT APPLICATION

(11) **EP 2 677 199 A1**
(43) Date of publication of application: **25.12.2013**
(21) Application number: 12746713.2
(22) Date of filing: 10.02.2012
(51) Int. Cl.: F16H 15/38

(54) **TOROIDAL TYPE CONTINUOUSLY VARIABLE TRANSMISSION**

(30) Priority: 17.02.2011 JP 2011031822
(71) Applicant: NSK Ltd., Tokyo 141-8560 (JP)
(72) Inventor: FUKUDA, Kota, Fujisawa-shi Kanagawa 251-8501 (JP); KISHIDA, Hirotaka, Fujisawa-shi Kanagawa 251-8501 (JP)
(74) Representative: Grünecker, Kinkeldey, Stockmair & Schwanhäusser
(86) International application number: PCT/JP2012/053139
(87) International publication number: WO 2012/111562

(57) **Abstract**

The present invention provides a toroidal continuously variable transmission capable of setting loading pressure at low pressure while avoiding a problem of excessive pressing with centrifugal hydraulic pressure.

The toroidal continuously variable transmission includes an input disc 2 to be rotated integrally with an input shaft 1 as being coupled with the input shaft which receives rotational force, and an output disc 3 which receives rotational force of the input disc 2 at a predetermined transmission ratio via a power roller 11 arranged at a space against the input disc 2 and is operated at constant output rotational speed. Further, a hydraulic pressing device 12A which presses the output disc 3 in the axial direction is arranged at a back surface of the output disc 3.

## Description

### Technical Field

The present invention relates to a toroidal continuously variable transmission which can be used as a transmission for automotive vehicles, various types of industrial machines, or the like.

### Background Art

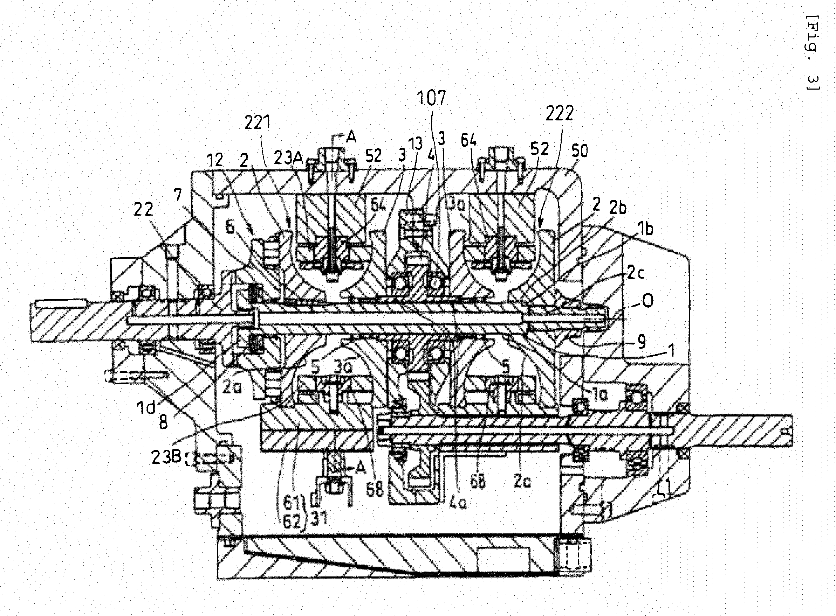

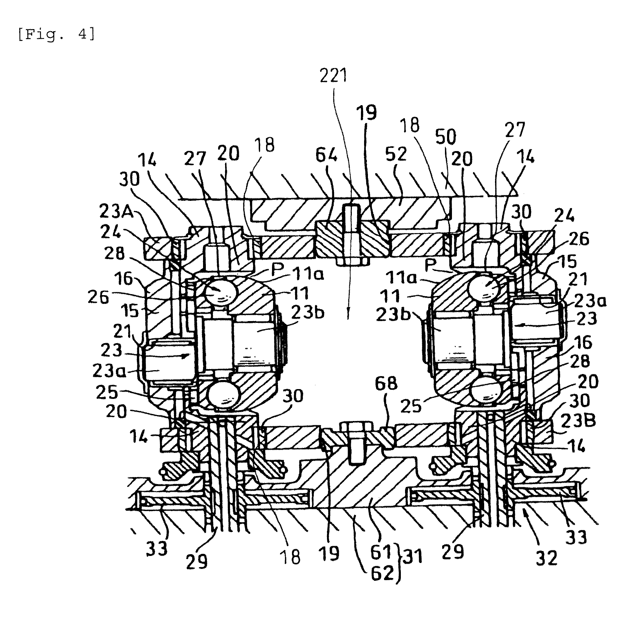

A double cavity toroidal continuously variable transmission which is used, for example, as a transmission for an automobile vehicle is structured as illustrated in FIGS. 3 and 4. As illustrated in FIG. 3, an input shaft (a center shaft) 1 is rotatably supported inside a casing 50 and two input discs 2, 2 and two output discs 3, 3 are attached to an outer circumference of the input shaft 1. Further, an output gear 4 is rotatably supported at an outer circumference of an intermediate portion of the input shaft 1. The output discs 3, 3 are spline-connected to cylindrical flange portions 4a, 4a which are arranged at a central portion of the output gear 4.

The input shaft 1 is to be rotationally driven by a drive shaft 22 via a loading cam type pressing device 12 which is arranged between the input disc 2 located at the left side in the drawing and a cam plate 7. Further, the output gear 4 is supported inside the casing 50 via a partition wall 13 which is structured by connecting two members. Accordingly, the output gear 4 can rotate about an axis O of the input shaft 1 while being prevented from being displaced in the direction of the axis O.

The output discs 3, 3 are supported by needle bearings 5, 5 which are arranged at a space against the input shaft 1 as being rotatable about the axis line O of the input shaft 1. Further, the input disc 2 at the left side in the drawing is supported by the input shaft 1 via a ball spline 6 and the input disc 2 at the right side in the drawing is spline-connected to the input shaft 1, so that the input discs 2 are to be rotated together with the input shaft 1. Further, power rollers 11 (see FIG. 4) are rotatably sandwiched between inner surfaces (toroidal surfaces) 2a, 2a of the input discs 2, 2 and inner surfaces (toroidal surfaces) 3a, 3a of the output discs 3, 3.

A stepped portion 2b is arranged at an inner circumferential surface 2c of the input disc 2 which is located at the right side of FIG. 3. A stepped portion 1b arranged at an outer circumferential surface 1a of the input shaft 1 is struck with the stepped portion 2b, while a back surface (a right surface in FIG. 3) of the input disc 2 is struck with a loading nut 9. Accordingly, displacement of the input disc 2 in the direction of the axis O relative to the input shaft 1 is substantially prevented. Further, a coned disc spring 8 is arranged between the cam plate 7 and a flange portion 1d of the input shaft 1. The coned disc spring 8 exerts a pressing force to abutment portions between the toroidal surfaces 2a, 2a, 3a, 3a of the respective discs 2, 2, 3, 3 and circumferential surfaces 11a, 11a of the power rollers 11, 11.

FIG. 4 is a sectional view along line A-A in FIG. 3. As illustrated in FIG. 4, a pair of trunnions 15, 15 is arranged at the inside of the casing 50 as swinging respectively about a pair of pivot shafts 14, 14 located at positions which are twisted relatively to the input shaft 1. Here, the input shaft 1 is not illustrated in FIG. 4. Each of the trunnions 15, 15 has a pair of bent wall portions 20, 20 formed at both longitudinal (vertical in FIG. 4) end portions of a support plate portion 16 in a state of being bend toward an inner surface side of the support plate portion 16. A recessed pocket portion P for accommodating the power roller 11 is formed respectively at the trunnions 15, 15 by the bent wall portions 20, 20. Further, the pivot shafts 14, 14 are arranged coaxially with each other at outer surfaces of the respective bent wall portions 20, 20.

A circular hole 21 is formed at a central portion of the support plate portion 16 and a proximal end portion 23a of a displacement shaft 23 is supported by the circular hole 21. Here, the inclination angles of the displacement shafts (shaft portions) 23 supported at central portions of the trunnions 15, 15 can be adjusted by swinging the trunnions 15, 15 about the pivot shafts 14, 14. Further, each power roller 11 is rotatably supported via a radial needle bearing 99 at a circumference of a distal end portion 23b of the displacement shaft 23 projecting from an inner surface of each of the trunnions 15, 15. The power rollers 11, 11 are sandwiched between each of the input discs 2, 2 and each of the output discs 3, 3. Here, the proximal end portion 23a and the distal end portion 23b of each of the displacement shafts 23, 23 are offset each other.

Further, the pivot shafts 14, 14 of each of the trunnions 15, 15 are supported to freely swing and to be freely displaced axially (vertically in FIG. 4) relative to a pair of yokes 23A, 23B. The horizontal movement of the trunnions 15, 15 is restricted by the respective yokes 23A, 23B. Each of the yokes 23A, 23B is formed into a rectangular shape with pressing or forging of metal such as steel. Circular support holes 18 are formed at the four corners of each of the yokes 23A, 23B. The pivot shafts 14 arranged at both end portions of the trunnions 15 are respectively supported by the support holes 18 via radial needle bearings 30 swingably. Further, circular locking holes 19 are formed at central portions in the width direction (the horizontal direction in FIG. 3) of the yokes 23A, 23B. Spherical posts 64, 68 are internally fitted to inner circumferential surfaces of the locking holes 19 respectively having a spherical concave shape. That is, the upper yoke 23A is supported swingably by the spherical post 64 which is supported by the casing 50 via a fixing member 52 and the lower yoke 23B is supported swingably by the spherical post 68 and an upper cylinder body 61 of a drive cylinder 31 which supports the spherical post 68.

Here, the displacement shafts 23, 23 arranged at the trunnions 15, 15 are arranged at positions which are mutually opposite by 180 degrees relative to the input shaft 1. Further, the direction in which the distal end portions 23b of the displacement shafts 23, 23 are offset relative to the proximal end portions 23a is the same as the rotational direction of both discs 2, 2, 3, 3 (vertically opposite in FIG. 4). Further, the offset direction is substantially perpendicular to the direction in which the input shaft 1 is arranged. Accordingly, the respective power rollers 11, 11 are supported to be capable of slightly being displaced in a longitudinal direction of the input shaft 1. As a result, even in the event that the power rollers 11, 11 tend to be displaced in the axial direction of the input shaft 1 due to elastic deformation or the like of respective constituent members based on a thrust load generated by the pressing device 12, the displacement is absorbed without unreasonable force exerted to the respective constituent members.

Further, a thrust ball bearing 24 being a thrust rolling bearing and a thrust needle bearing 25 are arranged between an outer surface of the power roller 11 and an inner surface of the support plate portion 16 of the trunnion 15 sequentially in the order from the outer surface side of the power roller 11. Among the above, the thrust ball bearing 24 is to permit the rotation of each power roller 1 while bearing a load exerted to the power roller 11 in a thrust direction. Each thrust ball bearing 24 is structured with a plurality of balls (hereinafter, called rolling members) 26, 26, an annular holder 27 which holds the rolling members 26, 26 rotatably, and an annular outer ring 28. Further, an inner ring raceway of each thrust ball bearing 24 is formed at an outer surface (a large end surface) of each power roller 11, while an outer ring raceway is formed at an inner surface of the outer ring 28.

Further, the thrust needle bearing 25 is sandwiched between the inner surface of the support plate portion 16 of the trunnion 15 and an outer surface of the outer ring 28. The thrust needle bearing 25 as described above permits the swing of the power roller 11 and the outer ring 28 about the proximal end portion 23a of the displacement shaft 23 while bearing a thrust load exerted to the outer ring 28 from the power roller 11.

Further, drive rods (trunnion shafts) 29, 29 are arranged at one end portions (lower end portions in FIG. 4) of the respective trunnions 15, 15, and then, drive pistons (hydraulic pistons) 33, 33 are fixedly arranged at outer circumferential surfaces of intermediate portions of the respective drive rods 29, 29. Further, the drive pistons 33, 33 are fluid-tightly fitted to the drive cylinder 31 which is structured with an upper cylinder body 61 and a lower cylinder body 62. The drive pistons 33, 33 and the drive cylinder 31 structure a drive system 43 for displacing the respective trunnions 15, 15 in the axial direction of the pivot shafts 14, 14 of the trunnions 15, 15.

In a case of the toroidal continuously variable transmission structured as described above, the rotation of the input shaft 1 is transmitted to the respective input discs 2, 2 via the pressing device 12. The rotation of the input discs 2, 2 is transmitted respectively to the output discs 3, 3 via the pair of power rollers 11, 11, and then, the rotation of the output discs 3, 3 is taken out from the output gear 4.

When a rotational speed ratio between the input shaft 1 and the output gear 4 is changed, the pair of drive pistons 33, 33 is to be displaced in opposite directions to each other. In conjunction with the displacement of the respective drive pistons 33, 33, the pair of trunnions 15, 15 is displaced in opposite directions to each other. For example, the left power roller 11 in FIG. 4 is displaced downward in the drawing, while the right power roller 11 in the drawing is displaced upward in the drawing. As a result, directions of tangential forces are changed, the forces acting on the abutment portions between the circumferential surfaces 11a, 11a of the respective power rollers 11, 11 and inner surfaces 2a, 2a, 3a, 3a of the respective input discs 2, 2 and respective output discs 3, 3. Then, in conjunction with the direction changes of the forces, the respective trunnions 15, 15 swing (tilt) about the pivot shafts 14, 14 which are rotatably supported by the yokes 23A, 23B in opposite directions to each other.

Accordingly, abutment positions between the circumferential surfaces 11a, 11a of the respective power rollers 11, 11 and the respective inner surfaces 2a, 3a are changed, so that the rotational speed ratio between the input shaft 1 and the output gear 4 is changed. When a torque transmitted between the input shaft 1 and the output gear 4 is changed to cause variation in elastic deformation amount of the respective constituent members, the respective power rollers 11, 11 and the outer rings 28, 28 attached to the power rollers 11, 11 are slightly rotated about the proximal end portions 23a, 23a of the respective displacement shafts 23, 23. Since the thrust needle bearings 25, 25 are placed respectively between the outer surfaces of the respective outer rings 28, 28 and the inner surfaces of the support plate portions 16 which structure the trunnions 15, 15, the rotation is performed smoothly. Accordingly, only a small magnitude of force is required for changing the inclination angles of the respective displacement shafts 23, 23 as described above.

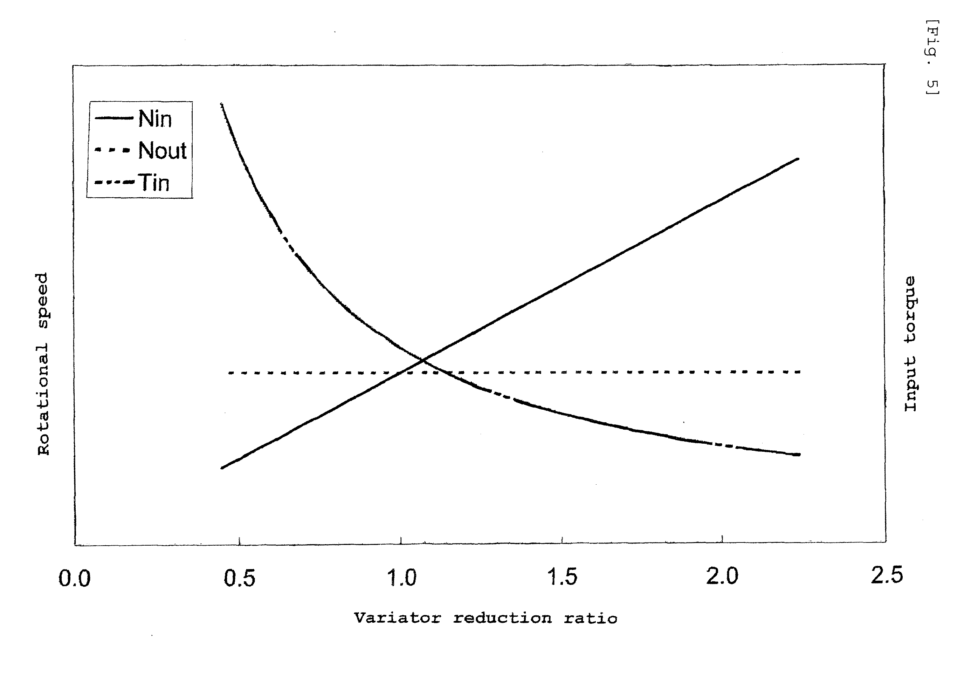

Incidentally, in a case that a toroidal continuously variable transmission is used as a transmission for an industrial machine (for example, for a generator) as being driven at constant rotational speed (for example, see Patent Literature 1), output rotational speed Nout is controlled to be constant (see a dotted line in FIG. 5). Therefore, as illustrated in FIG. 5, input rotational speed Nin is maximized and input torque Tin is decreased at the maximum reduction (at the maximum variator reduction ratio).

### Citation List

### Patent Literature

Patent Literature 1: Japanese Patent Application Laid-Open No. 11-210869

### Summary of Invention

### Technical Problem

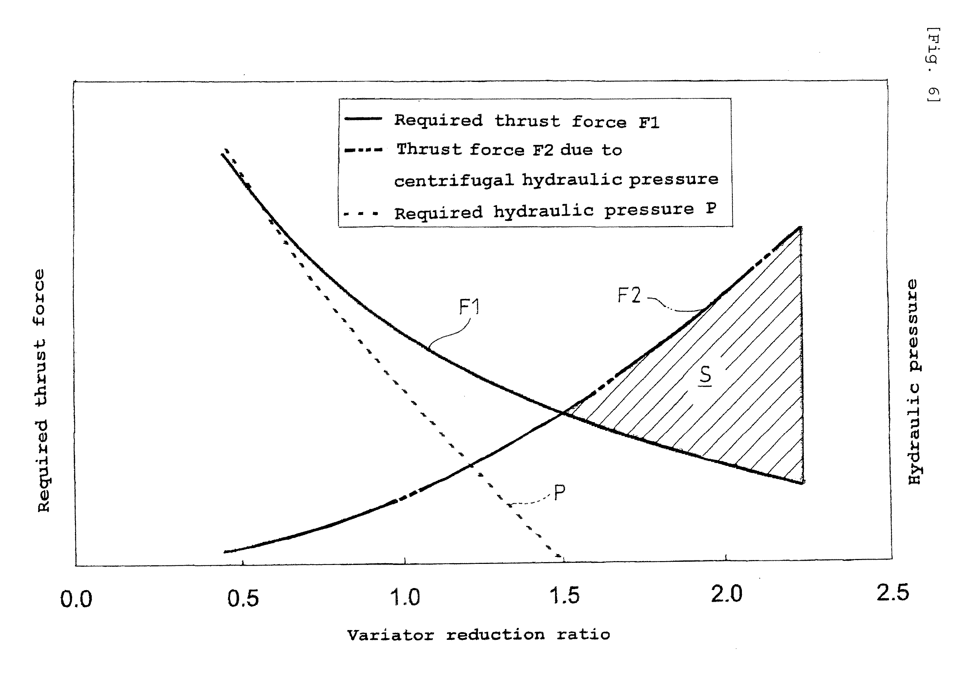

When the pressing device 12 is arranged at the input disc 2 side as described above in a form of FIG. 5, thrust force F2 due to centrifugal hydraulic pressure is increased as being closed to the maximum reduction (to the maximum variator reduction ratio; to the maximum of input rotational speed Nin), so that difference between the thrust force F2 due to centrifugal hydraulic pressure and required thrust force F1 becomes large as illustrated in FIG. 6. That is, excessive pressing occurs with centrifugal hydraulic pressure. In FIG. 6, excessive pressing area with centrifugal hydraulic pressure is indicated by slash lines S. Further, in this case, there arises a problem that required hydraulic pressure P becomes high (high hydraulic pressure is required) when the variator reduction ratio is at the minimum (the input rotation is at low speed).

The present invention has been made in view of the situations described above, and it is an object of the invention to provide a toroidal continuously variable transmission capable of setting loading pressure at low pressure while avoiding a problem of excessive pressing with centrifugal hydraulic pressure.

### Solution to Problem

In order to achieve the above object, the present invention provides a toroidal continuously variable transmission of which output rotational speed is approximately constant, including: an input disc to be rotated integrally with an input shaft as being coupled with the input shaft which receives rotational force; an output disc which receives rotational force of the input disc at a predetermined transmission ratio via a power roller arranged at a space against the input disc; and a hydraulic pressing device which presses the output disc in the axial direction as being arranged at a back surface of the output disc.
Here, the "approximately constant output rotational speed" denotes to include (allow) variation of the output rotational speed in the order of ±10%.

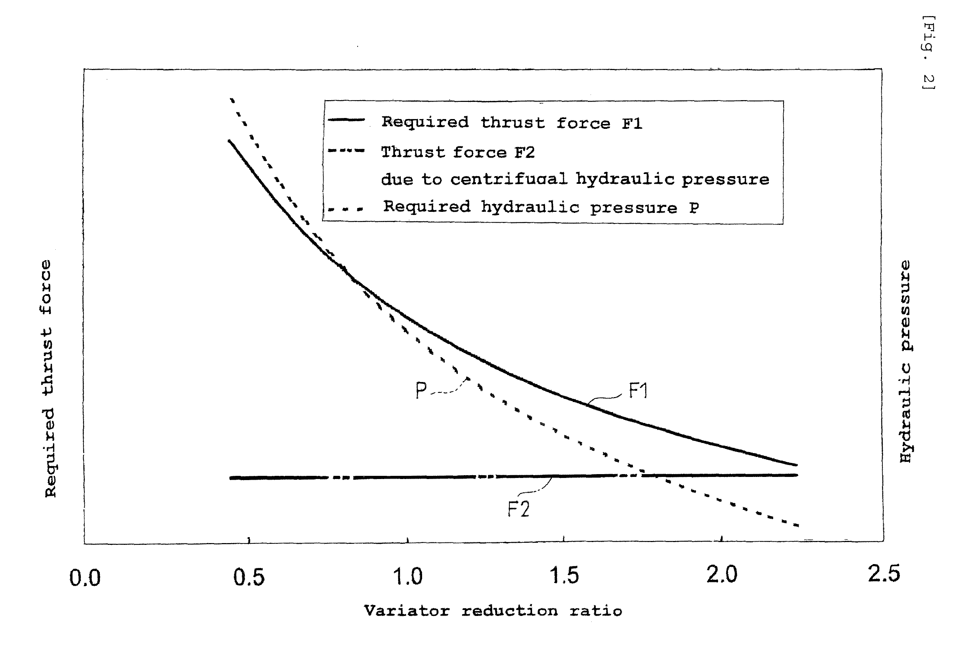

According to the above structure, since the pressing device is arranged not at the input disc side but at the output disc side, axial force being a sum of pressing force due to centrifugal hydraulic pressure which is generated by output rotation and spring force due to the spring which exerts pressing force to abutment portions between the toroidal surfaces of the respective discs and circumferential surfaces of the power rollers can be set as required thrust force at the maximum reduction (at the maximum variator reduction ratio) and the loading pressure can be set at low pressure, as can be clearly seen from a graph of FIG. 2. Accordingly, high efficiency and the like can be obtained owing to lightening and reducing of hydraulic pressure loss such that loading piston area can be reduced. Further, since the pressing device adopts hydraulic loading, centrifugal hydraulic pressure becomes large at high speed rotation.

### Advantageous Effects of Invention

According to the toroidal continuously variable transmission of the present invention, loading pressure can be set at low pressure while avoiding a problem of excessive pressing with centrifugal pressure.

### Brief Description of Drawings

FIG. 1 is a sectional view illustrating an example of a specific structure of a half toroidal continuously variable transmission according to an embodiment of the present invention.
FIG. 2 is a graph indicating relation of required thrust force, required hydraulic pressure, and thrust force due to centrifugal hydraulic pressure with variator reduction ratio in a case that a hydraulic pressing device is arranged at an output disc side as illustrated in FIG. 1.
FIG. 3 is a sectional view illustrating an example of a specific structure of a half toroidal continuously variable transmission which has been conventionally known.
FIG. 4 is a sectional view along line A-A of FIG. 3.
FIG. 5 is a graph indicating relation of input rotational speed, output rotational speed and input torque with variator reduction ratio in a case that a toroidal continuously variable transmission is used as a transmission for an industrial machine as being driven at constant rotational speed.
FIG. 6 is a graph indicating relation of required thrust force, required hydraulic pressure, and thrust force due to centrifugal hydraulic pressure with variator reduction ratio in a case that a hydraulic pressing device is arranged at an input disc side.

### Description of Embodiments

Hereinafter, embodiments of the present invention will be described with reference to the drawings.
Here, since features of the present invention relate to arrangement of a pressing device and the rest of structures and operations are the same as the structures and operations in the related art as described above, only characteristic portions of the present invention will be described in the following with brief description of the rest of portions while the same numerals as in FIGS. 3 and 4 are provided thereto.

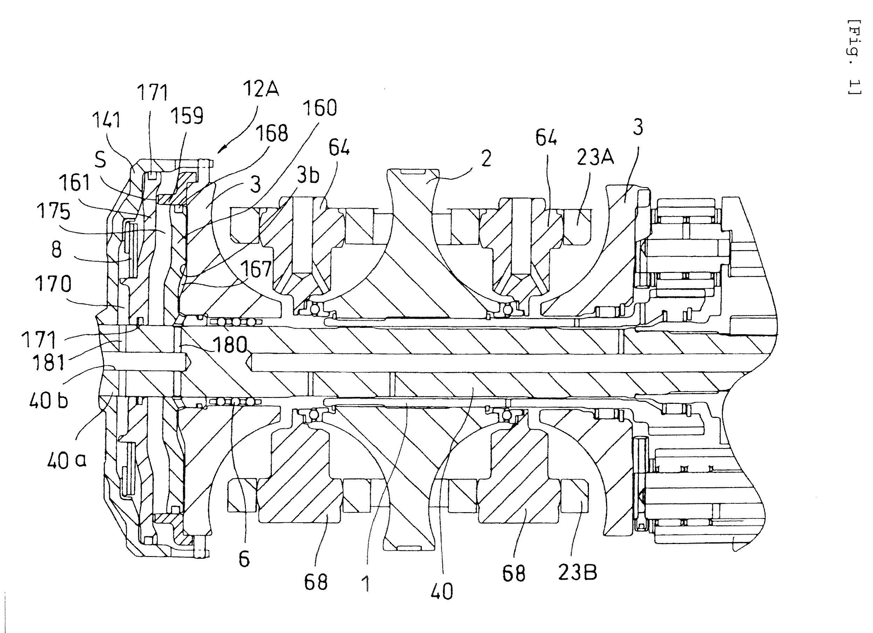

FIG. 1 schematically illustrates a structure of a main section of a toroidal continuously variable transmission according to an embodiment of the present invention. As illustrated in the drawing, the toroidal continuously variable transmission being used, for example, as a transmission for an industrial machine with constant output rotational speed especially for a generator is provided with an input disc 2 to be rotated integrally with an input shaft 1 as being coupled with the input shaft 1 which receives rotational force, and an output disc 3 which receives rotational force of the input disc 2 at a predetermined transmission ratio via a power roller 11 arranged at a space against the input disc 2. Here, arrangement of the output disc 3 and the input disc 2 is inverted from the abovementioned structure of FIGS. 3 and 4. In this case, the transmission principle of a torque (rotational force) from input to output is the same as the abovementioned structure of FIGS. 3 and 4.

Further, in the toroidal continuously variable transmission of the present embodiment, a hydraulic pressing device 12A which presses the output disc 3 in the axial direction is arranged at a back surface of the output disc 3 at one side. Then, axial force being a sum of pressing force due to centrifugal hydraulic pressure which is generated by output rotation and spring force due to a coned disc spring 8 is set to be required loading pressure.

The hydraulic pressing device 12A includes a first cylinder portion 141 which is integral with an end portion 40a of the output shaft 40, a second cylinder portion 159 which is integral with the input disc 2, a first circular body (a first piston portion) 161, and a second circular body (a second piston portion) 160.

The first cylinder portion 141 is engaged with an outer circumference of the output disc 3 and is arranged as being opposed to the back surface 3b of the output disc 3. Further, the second cylinder portion 159 is shaped to be cylindrical and is extended toward the first cylinder portion 141 from an outer circumferential edge of the output disc 3.

The second circular body 160 is arranged in a state of being opposed to the back surface 3b of the output disc 3 while an inner circumferential surface thereof is fitted and fixed to an outer circumferential surface of the output shaft 40 and an outer circumferential surface thereof is fitted to an inner circumferential surface of the second cylinder portion 159. Further, the first circular body 161 is arranged between the second circular body 160 and the first cylinder portion 141 while an inner circumferential surface thereof is fitted to the outer circumferential surface of the output shaft 40 and an outer circumferential surface thereof is fitted to an inner circumferential surface of the first cylinder portion 141.

A first hydraulic pressure room (oil room) 170 is structured by a space which is surrounded by an inner surface of the first cylinder portion 141, the first circular body 161, and a part of the outer circumferential surface of the output shaft 40. The first hydraulic room 170 is kept as being fluid-tight by a plurality of seal members 171. Further, a second hydraulic pressure room (oil room) 167 is structured by a space which is surrounded by the inner circumferential surface of the second cylinder portion 159, the second circular body 160, the back surface 3b of the output disc 3, and a part of the outer circumferential surface of the output shaft 40. The second hydraulic room 167 is kept as being fluid-tight by a plurality of seal members 168. Further, an air room is formed at a space 175 which is located between the second circular body 160 and the first circular body 161 at the inner circumferential side of the second cylinder portion 159. The air room 175 is kept as being fluid-tight by the pluralities of seal members 168, 171. Further, the second cylinder 159 forms a gap s against the first circular body 161, the gap s also functioning as a communication groove to have the air room 175 communicated with the outside. Further, the coned disc spring 8 to exert preliminary pressure is inserted to the first hydraulic pressure room 170.

An inner hole 40b is formed at the end portion 40a of the output shaft 40 along the longitudinal direction of the output shaft 40. Oil holes 180, 181 extended in the radial direction of the output shaft 40 are connected at the inner hole 40b. The oil holes 180, 181 connect the inner hole 40b to the hydraulic rooms 167, 170.

In the hydraulic pressing device 12A, when hydraulic pressure is exerted by supplying pressured oil to the first hydraulic pressure room 170, the first circular body 161 movable in the axial direction of the output shaft 40 is moved toward the output disc 3 along the axial direction against the first cylinder portion 141 which is fixed to the output shaft 40. Then, pressing force is exerted by the first circular body 161 abutted to the second cylinder portion 159 to press the output disc 3 to which the second cylinder portion 159 is arranged toward the other output disc 3.

Further, when hydraulic pressure is exerted by supplying pressured oil to the second hydraulic pressure room 167, the second cylinder body 159 arranged at the output disc 3 movable in the axial direction of the output shaft 40 is moved toward the other output disc 3 together with the output disc 3 against the second circular body 160 which is fixed to the output shaft 40. Then, pressing force is exerted to press the output disc 3 toward the other output disc 3.

Further, even in a state that hydraulic pressure is not exerted to the first hydraulic pressure room 170 and the second hydraulic pressure room 167, the first circular body 161 is urged toward the output disc 3 by the coned disc spring 8 as a preliminary pressurizing spring. Accordingly, pressing force is exerted to press the output disc 3 toward the other output disc 3.

According to the above structure, since the pressing device 12A is arranged not at the input disc 2 side but at the output disc 3 side, axial force being a sum of pressing force due to centrifugal hydraulic pressure which is generated by output rotation and spring force due to the spring 8 which exerts pressing force to abutment portions between the toroidal surfaces of the respective discs and circumferential surfaces of the power rollers can be set as required thrust force at the maximum reduction (at the maximum variator reduction ratio) and the loading pressure can be set at low pressure, as can be clearly seen from a graph of FIG. 2. Accordingly, high efficiency and the like can be obtained owing to lightening and reducing of hydraulic pressure loss such that loading piston area can be reduced. Further, since the pressing device 12A adopts hydraulic loading, centrifugal hydraulic pressure becomes large at high speed rotation.

In the abovementioned embodiment, the output disc 3 is arranged at the outer side of the input disc 2, and then, the output disc 3 at the outer side is pressed by the hydraulic pressing device 12A. However, it is also possible to press output discs 3 by arranging a pair of the output discs 3 at the inner side of a pair of input discs 2 and arranging a hydraulic pressing device 12A between the pair of output discs 3.

### Industrial Applicability

The present invention can be applied to a variety of half-toroidal continuously variable transmission of single-cavity types and double-cavity types.

### Reference Signs List

- 1: Input shaft
- 2: Input disc
- 3: Output disc
- 8: Coned disc spring
- 11: Power roller
- 12, 12A: Pressing device

## Claims

1. A toroidal continuously variable transmission of which output rotational speed is approximately constant, comprising:
an input disc to be rotated integrally with an input shaft as being coupled with the input shaft which receives rotational force;
an output disc which receives rotational force of the input disc at a predetermined transmission ratio via a power roller arranged at a space against the input disc; and
a hydraulic pressing device which presses the output disc in the axial direction as being arranged at a back surface of the output disc.

2. The toroidal continuously variable transmission according to claim 1, further comprising a spring which exerts pressing force to an abutment portion between toroidal surfaces of the respective discs and a circumferential surface of the power roller,
wherein axial force being a sum of pressing force due to centrifugal hydraulic pressure which is generated by output rotation and spring force due to the spring is to be required axial force.

3. The toroidal continuously variable transmission according to claim 1 or 2,
wherein the transmission is for a generator.
